# EUROPÄISCHE PATENTSCHRIFT

(11) **EP 2 708 109 B1**
(45) Veröffentlichungstag und Bekanntmachung des Hinweises auf die Patenterteilung: **09.08.2017**
(21) Anmeldenummer: 13174180.3
(22) Anmeldetag: 28.06.2013
(51) Int. Cl.: A01D 43/08

(54) **Landwirtschaftliche Erntemaschine**
Agricultural harvester
Moissonneuse agricole

(30) Priorität: 13.09.2012 DE 102012108542
(43) Veröffentlichungstag der Anmeldung: 19.03.2014
(73) Patentinhaber: CLAAS Saulgau GmbH, 88348 Bad Saulgau (DE)
(72) Erfinder: Look, Stefan, 47533 Kleve (DE); Große Wienker, Lukas, 59329 Wadersloh (DE); Weil, Burkhard, 48231 Warendorf (DE)

(56) Entgegenhaltungen:
- EP-A1- 1 151 654
- EP-A2- 1 358 788

## Beschreibung

Die Erfindung betrifft eine landwirtschaftliche Erntemaschine, insbesondere einen selbstfahrenden Feldhäcksler gemäß dem Oberbegriff des Anspruchs 1.

Landwirtschaftliche Erntemaschinen wie insbesondere selbstfahrende Feldhäcksler weisen üblicherweise einen sogenannten Auswurfbeschleuniger auf, auch Nachbeschleuniger genannt. Dieser dient dazu, von Arbeitsaggregaten (z.B. Einzugs- und Vorpressorgan, Häckselaggregat, Konditioniereinrichtung) bearbeitetes Erntegut, das sich in Form eines kontinuierlichen Erntegutstroms entlang eines Strömungspfads durch die Maschine bewegt, auf eine Geschwindigkeit zu beschleunigen, die einen sicheren Auswurf des Ernteguts durch einen sogenannten Auswurfkrümmer der Maschine gewährleistet. Aufgrund der Funktion des Auswurfbeschleunigers, das Erntegut auf eine für den Auswurf ausreichend hohe Geschwindigkeit zu beschleunigen, ist dieser zumeist den das Erntegut bearbeitenden Arbeitsaggregaten bezogen auf die Erntegutstromrichtung nachgelagert, d.h. diesen gegenüber stromabwärts angeordnet.

Steigende Erntegutdurchsätze sowie steigende angestrebte Auswurfweiten führen zu starkem Verschleiß insbesondere an denjenigen Komponenten des Auswurfbeschleunigers, die in Reibkontakt mit vorbeiströmendem Erntegut geraten. Auch an den Auswurfbeschleuniger in Gutstromrichtung angrenzende Maschinenkomponenten wie beispielsweise Verschleißbleche im Förderschacht (auch "Turm" genannt) sind aufgrund des Kontakts mit beschleunigtem Erntegut starkem Verschleiß ausgesetzt. Aus diesen Gründen, sowie ganz allgemein zu Wartungs- und Reparaturzwecken ist im Bedarfsfall ein Zugang zu betroffenen Komponenten notwendig.

Bei derzeit auf dem Markt verfügbaren Feldhäckslern ist es nur mit verhältnismäßig hohem Aufwand möglich, auf Komponenten des Auswurfbeschleunigers und/oder des daran angrenzenden Förderschachts zu Reparatur- oder Wartungszwecken zuzugreifen bzw. diese auszutauschen. Bei üblichen Bauformen von Feldhäckslern ist der Auswurfbeschleuniger zwar von einem hinter der Fahrerkabine befindlichen Wartungsraum von hinten zugänglich. Jedoch ist das Platzangebot in diesem Wartungsraum sehr begrenzt. Der geringe zur Verfügung stehende Platz erschwert und verlängert daher notwendige Service- oder Wartungsarbeiten, was einen erhöhten Kostenaufwand darstellt. Aufgrund der ungünstigen räumlichen Gegebenheiten bestehen nicht unerhebliche Verletzungsrisiken. Ein vollständiger Ausbau eines Nachbeschleunigers ist derzeit erst nach arbeitsintensiver teilweiser Zerlegung in dessen Komponenten möglich.

Aus der EP 1 358 788 A2 ist ein Feldhäcklser gemäß dem Oberbegriff des Anspruches 1 bekannt. Zur Vereinfachung der Umrüstung des Feldhäckslers bei der Verarbeitung von Mais auf Gras, bei welcher eine Konditioniereinrichtung nicht erforderlich ist, ist vorgesehen dass die Konditioniereinrichtung und der Auswurfbeschleuniger auf einem Rahmen montiert sind und eine funktionale Einheit bilden, welche um eine am Rahmen des Feldhäcksler angelenkte Achse schwenkbar ist. Die Konditioniereinrichtung ist bei Bedarf in den Gutfluss eingeschwenkt oder aus diesem ausgeschwenkt, wenn es der Konditioniereinrichtung bei der Erntegutverarbeitung nicht Bedarf. In beiden Positionen, die die Konditioniereinrichtung einnimmt, befindet sich der ebenfalls auf dem Rahmen montierte Auswurfbeschleuniger stets im Gutfluss.
Es ist daher eine Aufgabe der vorliegenden Erfindung, eine Erntemaschine der eingangs genannten Art anzugeben, die hinsichtlich des Auswurfbeschleunigers sowie des angrenzenden Förderschachts eine verbesserte Wartungsfreundlichkeit aufweist. Zudem soll es mit verringertem Aufwand möglich sein, einen Nachbeschleuniger nachträglich durch einen anderen Nachbeschleuniger zu ersetzen.
Die genannte Aufgabe wird gelöst durch eine Erntemaschine mit den Merkmalen des Anspruchs 1. Erfindungsgemäß zeichnet sich diese dadurch aus, dass der Auswurfbeschleuniger als eine zumindest ein Beschleunigungsorgan sowie ein umgebendes Gehäuse, gegenüber dem das Beschleunigungsorgan mittels einer Welle drehbar gelagert ist, umfassende als eine Baueinheit ausgeführt ist, die als ganze in eine Betriebsposition stromabwärts des Arbeitsaggregats in den Strömungspfad des Erntegutstroms montierbar und aus dieser Betriebsposition demontierbar ist, indem Mittel vorgesehen sind, mit denen die Baueinheit aus der Betriebsposition in eine Zugriffsposition innerhalb eines Wartungsraums der Erntemaschine bewegbar ist, wobei die Mittel eine schwenkbewegliche Lagerung der Baueinheit gegenüber einem Maschinenrahmen der Erntemaschine umfassen.

Dabei wurde zunächst erkannt, dass bei bekannten Erntemaschinen der genannten Art die Voraussetzungen ungünstig sind, unter denen Wartungs- und Servicearbeiten an den genannten Komponenten überhaupt durchgeführt werden können. Unter anderem wurde als störend erachtet, dass aufgrund des wenigen im Wartungsraum zur Verfügung stehenden Platzes die zu wartenden oder zu reparierenden Komponenten selbst im Wege stehen und derartige Arbeiten behindern. Zur Lösung wurden der Aufbau und die Eingüederung des Auswurfbeschleunigers in die Erntemaschine neu konzipiert, wonach erfindungsgemäß der Auswurfbeschleuniger als eine in sich abgeschlossene Baueinheit ausgeführt ist, die einerseits als ganze in eine Betriebsposition stromabwärts des Arbeitsaggregats in den Strömungspfad des Erntegutstroms montierbar ist, andererseits aus dieser Betriebsposition demontierbar ist.

Die Baueinheit des Auswurfbeschleunigers umfasst in diesem Sinne als wesentliche Funktionselemente zweckmäßigerweise zumindest ein Beschleunigungsorgan (Schaufelrad) sowie ein umgebendes Gehäuse, gegenüber dem das Beschleunigungsorgan mittels einer Welle drehbar gelagert ist. Die so gebildete Baueinheit lässt sich erfindungsgemäß als Ganze in deren Betriebsposition montieren bzw. aus dieser demontieren, d.h. ohne die Baueinheit beim jeweiligen Arbeitsvorgang in einzelne Komponenten zerlegen zu müssen. Vorzugsweise können der Baueinheit des Auswurfbeschleunigers weitere Funktionselemente zugeordnet sein, wie beispielsweise an der Welle angeordnete Antriebsräder zum Antrieb des Auswurfbeschleunigers über beispielsweise einen Antriebsriemen, an der Welle angeordnete Abtriebsräder zum Antrieb weiterer Arbeitsaggregate, Einrichtungen zur Verstellung eines wirksamen Spalts zwischen Beschleunigungsorgan und Gehäuse etc.

Die erfindungsgemäß geschaffene Handhabbarkeit des Auswurfbeschleunigers als eine Baueinheit ermöglicht einen vereinfachten Ein- und Ausbau in (bzw. aus) dessen Betriebsposition im Strömungspfad des Erntegutstroms bei jeweils deutlich reduziertem Zeitaufwand für einen Monteur. Durch die erleichterte Ein- und Ausbaubarkeit des Auswurfbeschleunigers lassen sich Verschleißteile des Auswurfbeschleunigers leichter ersetzen bzw. instand halten und/oder der Auswurfbeschleuniger als ganzer einfacher ersetzen. Daneben ergibt sich der vorteilhafte Effekt, dass im demontierten Zustand andere Maschinenkomponenten, insbesondere ein dem Auswurfbeschleuniger in Gutstromrichtung nachgelagerter Förderschacht ("Turm") erheblich einfacher zugänglich ist, so dass beispielsweise dessen Verschleißbleche oder der Förderschacht als ganzer leicht austauschbar sind. Aufgrund verringerter Ausfallzeiten bei Wartungsmaßnahmen lässt sich die erfindungsgemäße Erntemaschine so insgesamt wirtschaftlicher betreiben.

Die Erntemaschine zeichnet sich durch Mittel aus, mit denen der Auswurfbeschleuniger aus der Betriebsposition in eine Zugriffsposition innerhalb eines Wartungsraums der Erntemaschine bewegbar ist. Eine derartige Zugriffsposition könnte im einfachsten Fall bereits darin bestehen, dass der Auswurfbeschfeuniger in dieser Position außer Kontakt zu maschinenfesten Komponenten des Erntegutströmungspfads (insbesondere des Förderschachts) steht, so dass diese dann frei zugänglich sind. Weiterhin könnte die Zugriffsposition vorteilhaft so gewählt sein, dass der Auswurfbeschleuniger in dieser Position mittels eines wie auch immer gearteten Hub- und/oder Transportgeräts zugängüch und aus dem Wartungsraum entnehmbar ist.

Zum Verbringen des Auswurfbeschleunigers von der Betriebsposition in die Zugriffsposition sind unterschiedliche mechanische, hydraulische und/oder elektromechanische Mittel denkbar. Erfindungsgemäß umfassen diese eine schwenkbewegliche Lagerung des Auswurfbeschleunigers gegenüber dem Maschinenrahmen, insbesondere dem Kabinenträger der Erntemaschine. Durch eine schwenkbewegliche Lagerung wird auf konstruktiv einfache Weise eine Möglichkeit geschaffen, den Auswurfbeschleuniger kontrolliert aus dessen Betriebsposition heraus bewegen zu können. Vorteilhaft lässt sich dies umsetzen, indem der Auswurfbeschleuniger um eine Schwenkachse drehbar gegenüber dem Maschinenrahmen gelagert ist, um aus der Betriebsposition in die Zugriffsposition schwenkbar zu sein. Die Schwenkachse könnte dabei beispielsweise parallel zu einer Antriebswelle eines Häckselaggregats oder einer Konditioniereinrichtung der Erntemaschine verlaufen. Bei derartiger Gestaltung könnte sich die Betriebsposition des Auswurfbeschleunigers oberhalb und (bezogen auf die Vorwärtsfahrtrichtung der Erntemaschine) vor der Zugriffsposition befinden.
Gemäß einer vorteilhaften Weiterbildung der Erntemaschine umfassen die Mittel zur Bewegung des Auswurfbeschleunigers weiterhin eine der Erntemaschine zugeordnete Hubeinrichtung, die geeignet ist, das Gewicht des Auswurfbeschleunigers zumindest während der Bewegung aus der Betriebsposition in die Zugriffsposition voll oder teilweise aufzunehmen. Die Hubeinrichtung kann vorteilhaft die Bewegung des Nachbeschleunigers zwischen der Betriebsposition und der Zugriffsposition (bzw. umgekehrt) unterstützen, so dass trotz des erheblichen Gewichts des Auswurfbeschleunigers ein gefahrloser Umbau möglich ist.

Wie bereits ausgeführt, ist der Auswurfbeschleuniger schwenkbeweglich gegenüber dem Maschinenrahmen gelagert. Zur Gewährleistung eines sicheren Betriebs ist dabei der Auswurfbeschleuniger zweckmäßigerweise in der Betriebsposition arretierbar, insbesondere indem dieser mit einem rahmenfesten Förderschacht der Erntemaschine verschraubbar ist. Weitere Arretierungsmöglichkeiten, beispielsweise Verschraubungen gegenüber dem Maschinenrahmen und/oder Kabinenträger können vorgesehen sein. Ein Verschwenken des Auswurfbeschleunigers aus dessen Betriebsposition ist demnach erst nach Lösen der Arretierung(en) möglich.

Zum Antrieb eines Auswurfbeschleunigers ist dieser notwendigerweise in einen Antriebsstrang der Erntemaschine eingebunden. Üblicherweise sind dazu an der Welle des Auswurfbeschleunigers An- und/oder Abtriebsräder angeordnet, die beispielsweise über einen Riemen angetrieben werden bzw. weitere Aggregate (z.B. eine Konditioniereinrichtung) über einen Riemen antreiben. Eine verbesserte Ausbaubarkeit eines solchen Auswurfbeschleunigers ergibt sich, wenn ein dem Auswurfbeschleuniger zugeordnetes drehbares Antriebsrad und/oder Abtriebsrad in der Betriebsposition des Auswurfbeschleunigers in Antriebsverbindung mit einem Drehmomentübertragungsmittel steht, die Antriebsverbindung mit dem Drehmomentübertragungsmittel jedoch in der Zugriffsposition des Auswurfbeschleunigers unterbrochen ist. Mit anderen Worten ist auf diese Weise gewährleistet, dass durch die Bewegung des Auswurfbeschleunigers aus der Betriebsposition in die Zugriffsposition dessen Antriebsverbindung unterbrochen wird (bzw. umgekehrt hergestellt wird). Handelt es sich bei dem Drehmomentübertragungsmittel beispielsweise um einen das An- und/oder Abtriebsrad umschlingenden Riemen, so könnte auf konstruktiv vorteilhafte Weise die Antriebsverbindung durch Entspannung des Riemens unterbrochen werden. Durch die Entspannung des Riemens kann dann vorteilhaft der Auswurfbeschleuniger demontiert werden, ohne dass An- oder Abtriebsräder (insbesondere sogenannte "Riemenscheiben") von der Welle entfernt werden müssen.

Vorteilhaft ist dabei das zumindest eine Antriebsrad und/oder Abtriebsrad auf einer zu der Schwenkachse des Auswurfbeschleunigers parallelen Welle gelagert, die von der Schwenkachse beabstandet ist. Mit einer derartigen Anordnung verursacht eine Schwenkbewegung des Auswurfbeschleunigers beispielsweise ein Spannen bzw. Entspannen eines umschlingenden Riemens.

Ein mit dem Auswurfbeschleuniger gekoppelter Riemen kann unterschiedlichen Zwecken dienen. Gemäß einer energieeffizienten Antriebsgestaltung steht in der Betriebsposition das Antriebsrad des Auswurfbeschleunigers mit einem Hauptantriebsriemen der Erntemaschine in Antriebsverbindung, um über diesen antreibbar zu sein. Demnach wird also der Auswurfbeschleuniger direkt vom Hauptantriebsriemen der Erntemaschine angetrieben.

Weiterhin kann vorgesehen sein, dass in der Betriebsposition das Abtriebsrad des Auswurfbeschleunigers mit einem Nebenantriebsriemen der Erntemaschine in Antriebsverbindung steht, um über diesen zumindest ein weiteres Arbeitsaggregat wie beispielsweise eine Konditioniereinrichtung anzutreiben. Vorteilhaft befinden sich dabei das Antriebsrad und das Abtriebsrad des Auswurfbeschleunigers auf gegenüberliegenden Seiten des Auswurfbeschleunigers, nämlich an gegenüberliegenden Enden der Welle des Auswurfbeschleunigers.

Auswurfbeschleuniger weisen ein hohes Gewicht auf. Um den Auswurfbeschleuniger in der Zugriffsposition sicher aufzunehmen und beispielsweise aus dem Wartungsraum der Maschine heraus bewegen zu können, ist vorteilhaft eine Transporteinrichtung in den Wartungsraum einbringbar, die geeignet ist, den in die Zugriffsposition bewegten Auswurfbeschleuniger aufzunehmen.

Auf weiterhin vorteilhafte Weise lässt sich der Wartungsraum derart öffnen, dass der in die Zugriffsposition bewegte Auswurfbeschleuniger mittels eines Flurförderfahrzeugs und/oder eines sonstigen Hub- und/oder Transportgeräts, vorzugsweise unter Zuhilfenahme der Transporteinrichtung, aus dem Wartungsraum entnehmbar ist. Die Transporteinrichtung dient dabei dem Zweck, den Auswurfbeschleuniger sicher aufzunehmen und weist dazu vorteilhaft eine angepasste Form auf, die zum einen einen sicheren Halt des Auswurfbeschleunigers gewährleistet, zum anderen mittels des Hub- und/oder Transportgeräts wie beispielsweise eines Hubstaplers sicher gehoben bzw. transportiert werden kann.

Alternativ oder ergänzend zu der Möglichkeit, den Auswurfbeschleuniger in eine Zugriffsposition innerhalb des Wartungsraum zu bewegen, ist es denkbar, dass der Erntemaschine Mittel zugeordnet sind, womit der Auswurfbeschleuniger aus der Betriebsposition und/oder aus der Zugriffsposition in eine Wartungsposition außerhalb, insbesondere seitlich oder unterhalb des Wartungsraums der Erntemaschine bewegbar ist.

Bei der landwirtschaftlichen Erntemaschine handelt es sich vorzugsweise um einen selbstfahrenden Feldhäcksler.

Die Erfindung wird anhand der nachfolgenden Figuren an einem Ausführungsbeispiel näher erläutert. Daraus ergeben sich auch vorteilhafte Ausgestaltungsmöglichkeiten und damit verbundene Effekte. In den Figuren zeigen:
- Fig. 1: eine schematische Seitenansicht eines selbstfahrenden Feldhäckslers,
- Fig. 2 bis 5: perspektivische Teilansichten eines selbstfahrenden Feldhäckslers in verschiedenen Zuständen, insbesondere verschiedenen Einbaupositionen des Auswurfbeschleunigers.

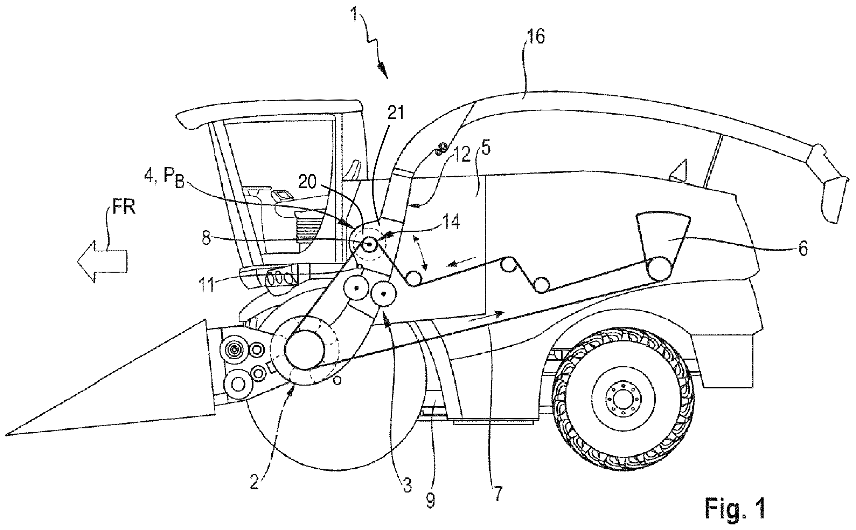

Fig. 1 zeigt eine landwirtschaftliche Erntemaschine in Form eines selbstfahrenden Feldhäckslers 1 in schematischer Seitenansicht von links. Der Feldhäcksler 1 ist auf für sich bekannte Weise (daher nicht näher bezeichnet) mit einem Paar angetriebener Vorder- und lenkbarer Hinterräder ausgestattet, sowie mit einem Erntevorsatzgerät und einem diesem nachgelagerten Einzugs- und Vorpressaggregat. Bei der Erntefahrt über das Feld in angezeigter Vorwärtsfahrtrichtung FR wird Erntegut durch das Einzugs- und Vorpressaggregat einer rotierenden Häckseltrommel 2 zugeführt und dort in Zusammenwirkung mit einer stehenden Gegenschneide zerkleinert, insbesondere gehäckselt. Das Erntegut durchläuft als kontinuierlicher Erntegutstrom anschließend eine optional in den Feldhäcksler 1 einbaubare Konditioniereinrichtung 3, die mittels zweier gegenläufig angetriebener Cracker-Walzen ein Aufschließen von im Erntegut enthaltenen Maiskörnern bewirkt.

Auf zunächst für sich bekannte Weise ist den gutbearbeitenden Arbeitsaggregaten 2, 3 ein Auswurfbeschleuniger 4 nachgeordnet, der zur Beschleunigung des bearbeiteten Ernteguts dient, um dieses nach Durchlaufen eines angrenzenden Förderschachts 12 durch eine Überladeeinrichtung in Form eines Auswurfkrümmers 16 aus dem Feldhäcksler 1 auszuwerfen.

Der Feldhäcksler 1 verfügt über einen heckseitig angeordneten Antriebsmotor 6. Dieser übertragt einen Teil seiner Antriebsleistung über einen Hauptantriebsriemen 7 an die Häckseltrommel 2 sowie an den Auswurfbeschleuniger 4. Eine durch den Auswurfbeschleuniger 4 verlaufende Welle 8 ist dazu einen Endes mit einem in dieser Ansicht sichtbaren Antriebsrad 14 versehen, das teilweise vom Hauptantriebsriemen 7 umschlungen ist, um so über den Hauptantriebsriemen 7 vom Antriebsmotor 6 antreibbar zu sein.

Die Konditioniereinrichtung 3 ist auf für sich gesehen bekannte Weise aus dem Strömungspfad des Ernteguts entfernbar, um diese beispielsweise durch ein Schachtelement zu ersetzen, wenn eine zusätzliche Konditionierung des Ernteguts nicht gewünscht ist. Dazu lässt sich die Konditioniereinrichtung 3 in Richtung des Hecks des Feldhäckslers 1 aus dem Strömungspfad des Ernteguts bewegen.

Die Konditioniereinrichtung 3 und der Auswurfbeschleuniger 4 sind von einem Wartungsraum 5 des Feldhäckslers 1 aus zugänglich.

Im laufenden Betrieb des Feldhäckslers 1 sorgt die Reibung des Ernteguts an Komponenten (z.B. Schaufelrad mit Wurfpaddeln, Gehäusebleche) des Nachbeschleunigers 4 sowie des stromabwärts angrenzenden Förderschachts 12 für Verschleiß und damit eine fortschreitende Zerstörung betroffener Verschleißteile. Entsprechend müssen einzelne Komponenten bedarfsweise ausgetauscht werden, um einen sicheren Betrieb des Feldhäckslers 1 zu gewährleisten.

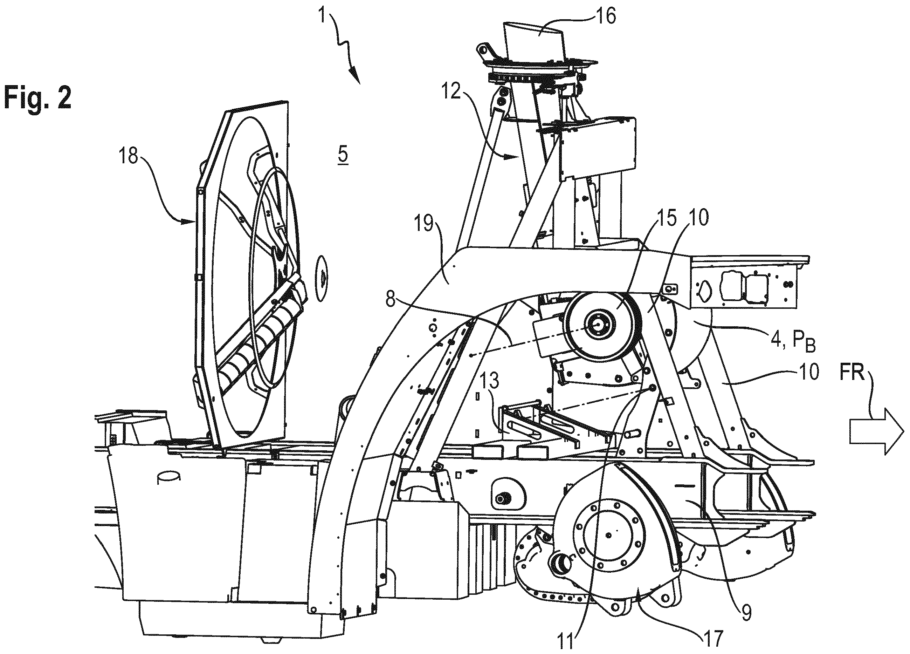

Der Feldhäcksler 1 weist dazu erfindungsgemäß einen Auswurfbeschleuniger 4 auf, der als eine Baueinheit ausgeführt ist, die als ganze in eine in Fig. 1 gezeigte Betriebsposition P_{B} stromabwärts der Arbeitsaggregate 2, 3 in den Strömungspfad des Erntegutstroms montierbar und aus dieser Betriebsposition P_{B} demontierbar ist. Der Nachbeschleuniger 4 ist gemäß dem gezeigten Ausführungsbeispiel dazu schwenkbeweglich gegenüber dem Maschinenrahmen 9 des Feldhäckslers 1 gelagert, nämlich um eine quer zur Vorwärtsfahrtrichtung FR des Feldhäckslers 1 verlaufende Schwenkachse 11 drehbar. Dabei umfasst die Baueinheit des Auswurfbeschleunigers 4 zumindest ein Beschleunigungsorgan in Form eines Schaufelrads 20 sowie ein umgebendes Gehäuse 21, gegenüber dem das Schaufelrad 20 mittels einer Welle 8 drehbar gelagert ist. Weitere Elemente können der Baueinheit zugeordnet sein, wie im gezeigten Ausführungsbeispiel ein Antriebsrad 14 und ein Abtriebsrad 15. Das Gehäuse 21 grenzt an dessen Unterseite an die Konditioniereinrichtung 3 und an dessen Oberseite an den Förderschacht 12 an, um in der in Fig. 1 gezeigten Betriebsposition P_{B} einen geschlossenen Strömungspfad für das durch die Maschine geförderte Erntegut auszubilden.
In Fig. 1 befindet sich der Auswurfbeschleuniger 4 demnach in seiner Betriebsposition P_{B} im Strömungspfad des Erntegutstroms. Wird die dem Auswurfbeschleuniger 4 vorgelagerte Konditioniereinrichtung 3 aus dem Strömungspfad des Ernteguts entfernt, so lässt sich der Auswurfbeschleuniger 4 - nach Lösen von sichernden Arretierungen (hier nicht gezeigt) - aus der Betriebsposition P_{B} um die Schwenkachse 11 schwenken, wodurch sich der Auswurfbeschleuniger 4 auf noch näher zu beschreibende Weise zunächst in eine Zugriffsposition innerhalb des Wartungsraums 5 bewegen und weiterhin auch vollständig aus der Maschine 1 ausbauen lässt (Wartungsposition).
Bereits anhand von Fig. 1, welche die bezogen auf die Vorwärtsfahrtrichtung FR des Feldhäckslers 1 linke Seite der Maschine zeigt, ist zu sehen, dass sich mit einer Drehung des Auswurfbeschleunigers 4 im Uhrzeigersinn um die Schwenkachse 11 eine Entspannung des Hauptantriebsriemens 7 ergibt. Für den noch zu erläuterten Ausbau des Auswurfbeschleunigers 4 ist damit bereits ersichtlich, dass das Antriebsrad 14 des Auswurfbeschleunigers 4 entlastet wird und somit der Auswurfbeschleuniger 4 als Baueinheit aus dem Hauptantriebsstrang entnehmbar ist, ohne dass eine Demontage des Antriebsrads 14 von der Baueinheit des Auswurfbeschleunigers 4 erforderlich ist. Die nachfolgenden Figuren 2 bis 5 erläutern anhand einer Abfolge perspektivischer Teilansichten eines Feldhäckslers 1 den Vorgang des Ausbaus eines Auswurfbeschleunigers 4. Da die Fig. 2 bis 5 einen Feldhäcksler 1 jeweils in Teildarstellung von der rechten Maschinenseite (bezogen auf die Vorwärtsfahrtrichtung FR) zeigen, sei angemerkt, dass in den Fig. 2 bis 5 nicht sichtbare Maschinenkomponenten eines Feldhäckslers 1 entsprechend zu ergänzen sind. Hierzu sei unter anderem auf die Darstellung gemäß Fig. 1 verwiesen.
Fig. 2 zeigt nun einen mit Fig. 1 korrespondierenden Zustand des Feldhäckslers 1, bei dem sich nämlich der Auswurfbeschleuniger 4 in einer Betriebsposition P_{B} befindet. Der Auswurfbeschleuniger 4, dessen Welle 8 parallel zur Vorderarche 17 (hier ohne Vorderräder gezeigt) und somit quer zur Vorwärtsfahrtrichtung FR verläuft, ist zwischen zwei sich schräg aufwärts erstreckenden Streben eines Kabinenträgers 10 angeordnet und diesen gegenüber gelenkig gelagert. Dazu stützt sich der Auswurfbeschleuniger 4 in einer Schwenkachse 11 am Kabinenträger 10 ab. Eine am Kabinenträger 10 anbringbare Fahrerkabine ist aus Übersichtsgründen in Fig. 2 nicht gezeigt. Aus den gleichen Gründen sind dem Auswurfbeschleuniger vorgelagerte Arbeitsaggregate wie Häckseltrommel und Konditioniereinrichtung sowie sonstige Einzelheiten wie Rahmenverkleidungen in den Fig. 2 bis 5 nicht dargestellt. Hierzu sei teils auf Fig. 1 verwiesen.

In der Ansicht der Fig. 2 ist ein dem Auswurfbeschleuniger 4 zugeordnetes Abtriebsrad 15 sichtbar, das am diesseitigen Ende der Welle 8 angeordnet ist und dem Zweck des Antriebs einer darunter einbaubaren Konditioniereinrichtung (vgl. Fig. 1) dient. In einem Einbauzustand der Konditioniereinrichtung (vgl. Fig. 1) ist das Abtriebsrad 15 von einem Antriebsriemen umschlungen, der weiterhin ein Antriebsrad der Konditioniereinrichtung umschlingt, um diese anzutreiben.

Ein fest mit dem Maschinenrahmen 9 verbundener Förderschacht 12 grenzt oben an den Auswurfbeschleuniger 4 an. Dieser mündet an dessen oberem Ende wiederum im Auswurfkrümmer 16 (hier nur teilweise gezeigt). Unmittelbar hinter den Komponenten Konditioniereinrichtung (wenn auch in Fig. 2 bereits ausgebaut), Nachbeschleuniger 4, Förderschacht 12 befindet sich ein Wartungsraum 5. Dieser wird nach vorne von den genannten gutstromführenden Komponenten, nach hinten von einem senkrecht stehenden Kühler 18 und nach unten vom Maschinenrahmen 9 begrenzt. Seitliche Verkleidungen, die eine Zugangstür für den Zugang einer Wartungsperson umfassen, sowie eine obere Dachbegrenzung sind aus Darstellungsgründen nicht gezeigt, begrenzen jedoch den Wartungsraum 5 in seitlichen Richtungen bzw. nach oben.

Auf der bezogen auf die Vorwärtsfahrtrichtung FR rechten Maschinenseite befindet sich seitlich an den Maschinenrahmen 9 angebaut ein Podest 19, das sich bogenförmig mit etwa gleichem Abstand um das rechte Ende der Vorderachse 17 erstreckt. Ein an das Ende der Achse 17 angebautes rechtes Vorderrad (hier demontiert) wird von dem Podest 19 demnach im Sinne eines Kotflügels eingefasst und schützend abgedeckt.

Zum Ausbau des Auswurfbeschleunigers 4 aus dem Feldhäcksler 1 sind vorbereitend die folgenden Maßnahmen zu treffen: Das rechte Vorderrad ist - wie in Fig. 2 dargestellt - zu demontieren. Ebenso ist ein sich zwischen Maschinenrahmen 9 und Podest 19 erstreckendes flächiges Verkleidungselement zu entfernen. Auf diese Weise ergibt sich für den Wartungsraum 5 (neben einer nicht gezeigten Zugangstür) eine weitere, annähernd trapezförmige Öffnung, die nach unten von Längsträgern des Maschinenrahmens 9, nach oben und hinten vom Podest 19 und nach vorn vom Kabinenträger 10 begrenzt wird. Wie noch anhand der nachfolgenden Figuren zu beschreiben, ermöglicht die so gebildete Öffnung eine Entnahme der kompletten Baueinheit des Auswurfbeschleunigers 4 durch die Öffnung hindurch.

Zur Bewegung des Auswurfbeschleunigers 4 aus dessen in Fig. 2 gezeigter Betriebsposition P_{B} wird dessen Verschraubung (nicht gezeigt) gegenüber dem Förderschacht 12 gelöst. Gegebenenfalls sind weitere Verschraubungen beispielsweise gegenüber dem Kabinenträger 10 zu lösen. Nach Lösen der Verschraubungen ist die Baueinheit des Auswurfbeschleunigers 4 nur noch um eine Schwenkachse 11 drehbar mit dem Maschinenrahmen 9, hier dem maschinenrahmenfesten Kabinenträger 10, verbunden. Da sich der Schwenkpunkt (Achse 11) bezogen auf die Vorwärtsfahrtrichtung FR deutlich vor dem Schwerpunkt des Auswurfbeschleunigers 4 befindet, neigt der Auswurfbeschleuniger 4 nun dazu, schwerkraftbedingt entgegen dem Uhrzeigersinn (gemäß Ansicht der Fig. 2 bis 5 von rechts) um die Schwenkachse 11 nach unten zu kippen. Um eine beschädigungsfreie Bewegung zu gewährleisten, kann vorteilhaft eine sich maschinenseitig abstützende Hubeinrichtung (nicht gezeigt, beispielsweise ein oberhalb am Förderschacht 12 einzuhängender Flaschenzug) genutzt werden, die geeignet ist, das Gewicht des Auswurfbeschleunigers 4 während der Bewegung aus der Betriebsposition P_{B} zumindest teilweise aufzunehmen.

Wie Fig. 2 weiterhin zeigt, ist in den Wartungsraum 5 bereits eine Transporteinrichtung 13 eingebracht worden. Hierbei handelt es sich um eine zur sicheren Aufnahme des Auswurfbeschleunigers 4 geeignete Hilfseinrichtung. Die Transporteinrichtung 13 weist an deren Unterseite zwei parallel verlaufende, zueinander beabstandete Vierkantrohre auf und ist somit beispielsweise von einem Gabelstapler mittels dessen Zinken sicher aufzunehmen. An deren Oberseite weist die Transporteinrichtung 13 eine an die Unterseite des Auswurfbeschleunigers 4 angepasste Form auf.

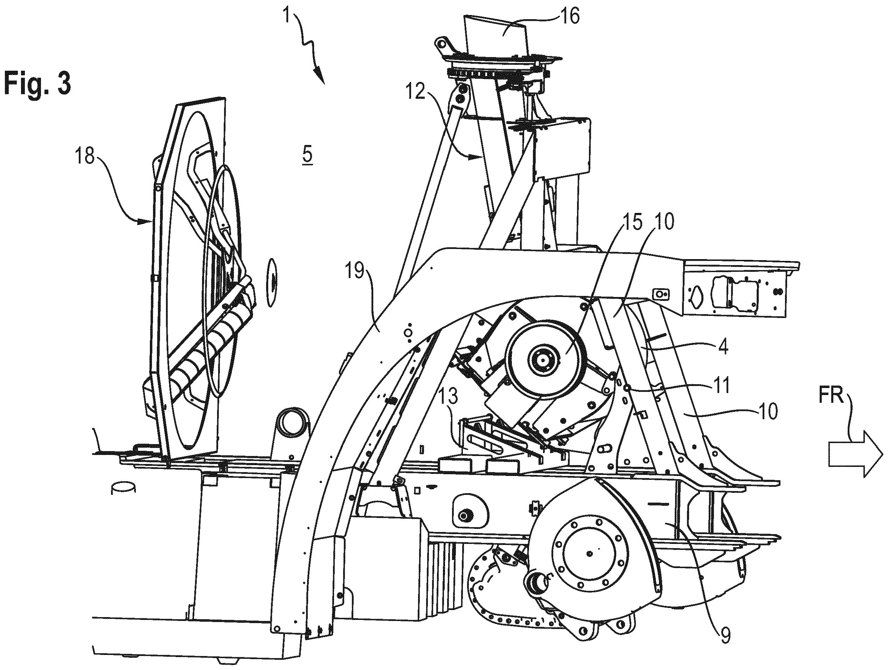

Fig. 3 zeigt nun den Auswurfbeschleuniger 4 in einer (gegenüber dem Zustand gemäß Fig. 2) geringfügig aus der Betriebsposition P_{B} entgegen dem Uhrzeigersinn gekippten Stellung. Der Auswurfbeschleuniger 4 befindet sich demnach schon nicht mehr im Strömungspfad des Erntegutstroms.

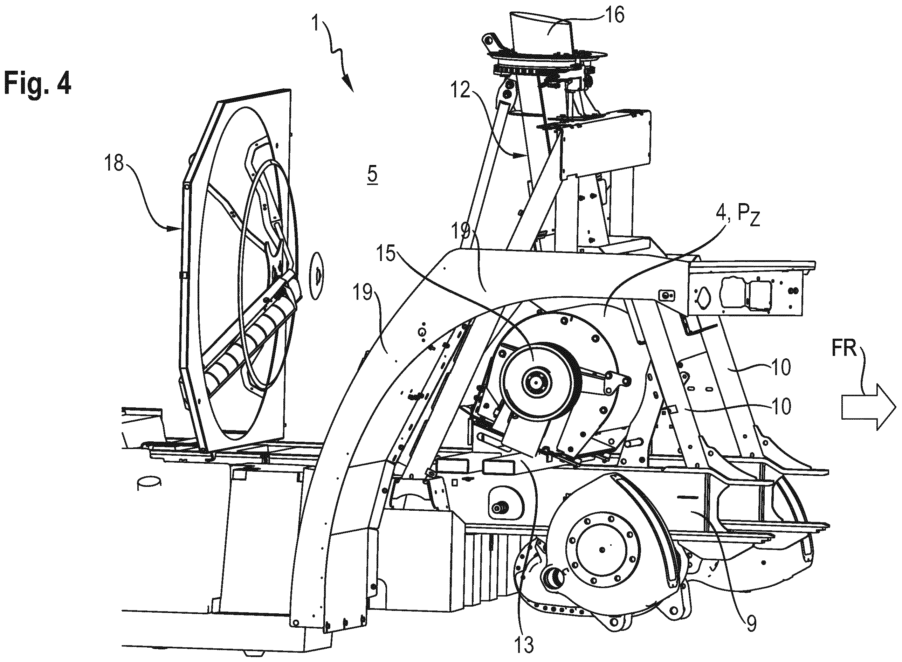

Wie in Fig. 4 zu sehen, ist der Auswurfbeschleuniger 4 ausreichend weit um die Schwenkachse 11 gedreht worden, um in einer so erreichten Zugriffsposition P_{z} nun auf der Transporteinrichtung 13 aufzuliegen. Der Auswurfbeschleuniger 4 befindet sich dabei weiterhin innerhalb des Wartungsraums 5 des Feldhäckslers, wobei bereits in dieser Position P_{z} ein erleichterter Zugriff auf den Auswurfbeschleuniger 4 sowie auf andere Komponenten des Feldhäckslers 1, insbesondere auf Komponenten des Förderschachts 12 wie beispielsweise angrenzende Verschleißbleche möglich ist. Einfache Wartungsarbeiten könnten in diesem Zustand bereits durchgeführt werden.

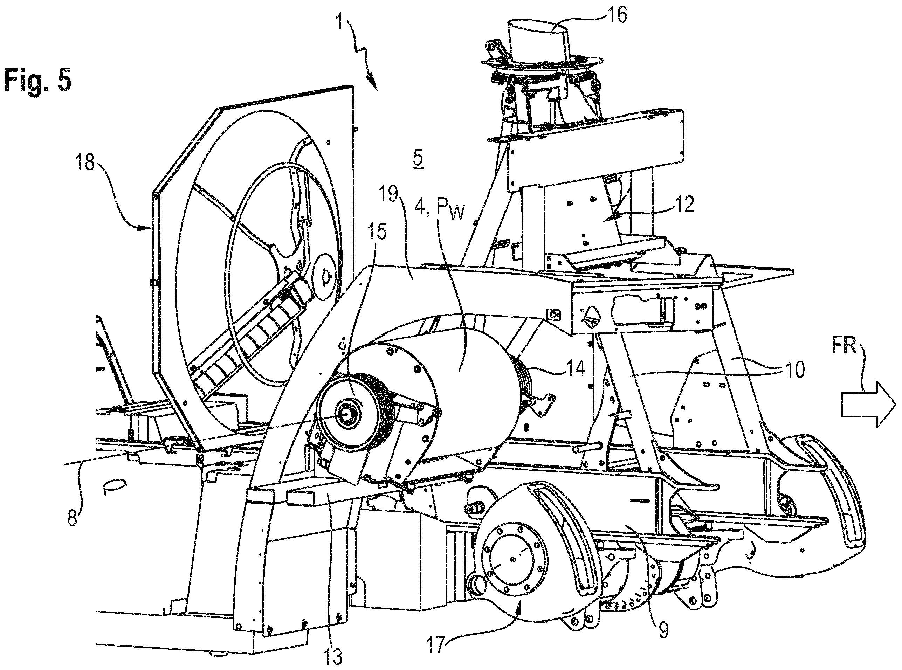

Wie Fig. 5 zeigt, lässt sich der in der Zugriffsposition P_{z} befindliche Auswurfbeschleuniger 4 in einem nächsten Schritt - beispielsweise mittels eines Flurförderfahrzeugs und/oder eines sonstigen Hub- und/oder Transportgeräts - unter Zuhilfenahme der Transporteinrichtung 13 aus dem Wartungsraum 5 entnehmen. Der Auswurfbeschleuniger 4 wird dazu seitlich aus dem geöffneten Wartungsraum 5 bewegt und verlässt unterhalb des Podestes 19 die Maschine. Bei einem sonstigen Hub- bzw. Transportgerät könnte es sich beispielsweise auch um ein Schienensystem (vorzugsweise teleskopierbar) handeln. In der erreichten Wartungsposition P_{w} außerhalb der Maschine 1 können in jedem der Fälle Wartungsarbeiten aller Art am Auswurfbeschleuniger 4 ohne räumliche Beschränkungen vorgenommen werden.

Im ausgebauten Zustand des Auswurfbeschleunigers 4 können vorteilhaft auch an dem Feldhäcksler 1 vereinfacht Wartungsarbeiten vorgenommen werden. Beispielsweise lassen sich Verschleißbleche des Förderschachts 12 ("Turm") durch den erheblich erleichterten Zugang einfacher und schneller auswechseln. Durch den Aufbau des Auswurfbeschleunigers 4 als für sich abgeschlossene Baueinheit und eine klare Schnittstelle gegenüber der Baueinheit des Förderschachts 12 sind diese beiden Baugruppen unabhängig voneinander. Demnach ist auch ein Ausbau des Förderschachts 12 einfach möglich.

Die beschriebene Erntemaschine 1 ermöglicht auf weiterhin vorteilhafte Weise einen schnellen Austausch des Auswurfbeschleuniger 4. So ist es beispielsweise denkbar, einen (weiteren) Auswurfbeschleuniger 4 zu bevorraten, um bei während der Ernte auftretenden Beschädigungen (z.B. durch Fremdkörper oder bei hohem Verschleiß) einen kompletten Austausch vornehmen zu können. Die Ausfallzeit der Maschine kann durch den einfachen und schnell ausführbaren Ersatz in geringen Grenzen gehalten werden.

Alternativ zu einer wie hier gezeigten und beschriebenen seitlichen Entnahme des Auswurfbeschleunigers 4 durch eine unterhalb des Podestes geschaffene Öffnung des Wartungsraums 5 wäre es auf ähnliche Weise denkbar, den Auswurfbeschleuniger 4 nach unten aus dem Wartungsraum 5 zu entnehmen. Dazu müsste eine entsprechende Öffnung im Boden des Wartungsraums 5 vorgesehen sein, durch die der Auswurfbeschleuniger 4 als Baueinheit bewegbar ist.

**Bezugszeichenliste**

| | | | |
|---|---|---|---|
| 1 | Feldhäcksler | P_{B} | Betriebsposition |
| 2 | Häckseltrommel | P_{Z} | Zugriffsposition |
| 3 | Konditioniereinrichtung | P_{W} | Wartungsposition |
| 4 | Auswurfbeschleuniger | FR | Vorwärtsfahrtrichtung |
| 5 | Wartungsraum | | |
| 6 | Antriebsmotor | | |
| 7 | Hauptantriebsriemen | | |
| 8 | Welle | | |
| 9 | Maschinenrahmen | | |
| 10 | Kabinenträger | | |
| 11 | Schwenkachse | | |
| 12 | Förderschacht | | |
| 13 | Transporteinrichtung | | |
| 14 | Antriebsrad | | |
| 15 | Abtriebsrad | | |
| 16 | Auswurfkrümmer | | |
| 17 | Vorderachse | | |
| 18 | Kühler | | |
| 19 | Podest | | |
| 20 | Schaufelrad | | |
| 21 | Gehäuse | | |

## Patentansprüche

1. Landwirtschaftliche Erntemaschine, insbesondere selbstfahrender Feldhäcksler (1), mit zumindest einem Arbeitsaggregat (2, 3) zur Bearbeitung eines Erntegutstroms und einem Auswurfbeschleuniger (4) für das bearbeitete Erntegut, **dadurch gekennzeichnet, dass** der Auswurfbeschleuniger (4) als eine zumindest ein Beschleunigungsorgan sowie ein umgebendes Gehäuse, gegenüber dem das Beschleunigungsorgan mittels einer Welle drehbar gelagert ist, umfassende Baueinheit ausgeführt ist, die als Ganze in eine Betriebsposition (P_{B}) stromabwärts des Arbeitsaggregats (2, 3) in den Strömungspfad des Erntegutstroms montierbar und aus dieser Betriebsposition (P_{B}) demontierbar ist, indem Mittel vorgesehen sind, mit denen die Baueinheit (4) aus der Betriebsposition (P_{B}) in eine Zugriffsposition (P_{z}) innerhalb eines Wartungsraums (5) der Erntemaschine (1) bewegbar ist, wobei die Mittel eine schwenkbewegliche Lagerung der Baueinheit (4) gegenüber einem Maschinenrahmen (9) der Erntemaschine (1) umfassen.

2. Landwirtschaftliche Erntemaschine nach Anspruch 1, **dadurch gekennzeichnet, dass** die Mittel eine schwenkbewegliche Lagerung des als Baueinheit ausgeführten Auswurfbeschleunigers (4) gegenüber einem Kabinenträger (10), der Erntemaschine (1) umfassen.

3. Landwirtschaftliche Erntemaschine nach Anspruch 1 oder 2, **dadurch gekennzeichnet, dass** der als Baueinheit ausgeführte Auswurfbeschleuniger (4) um eine Schwenkachse (11) drehbar gegenüber dem Maschinenrahmen (9) gelagert ist, um aus der Betriebsposition (P_{B}) in die Zugriffsposition (P_{z}) schwenkbar zu sein.

4. Landwirtschaftliche Erntemaschine nach einem der Ansprüche 1 bis 3, **dadurch gekennzeichnet, dass** die Mittel eine der Erntemaschine (1) zugeordnete Hubeinrichtung umfassen, die geeignet ist, das Gewicht des als Baueinheit ausgeführten Auswurfbeschleunigers (4) zumindest während der Bewegung aus der Betriebsposition (P_{B}) in die Zugriffsposition (P_{z}) voll oder teilweise aufzunehmen.

5. Landwirtschaftliche Erntemaschine nach einem der Ansprüche 1 bis 4, **dadurch gekennzeichnet, dass** der als Baueinheit ausgeführte Auswurfbeschleuniger (4) in der Betriebsposition (P_{B}) arretierbar ist, insbesondere indem dieser mit einem rahmenfesten Förderschacht (12) der Erntemaschine (1) verschraubbar ist.

6. Landwirtschaftliche Erntemaschine nach einem der Ansprüche 1 bis 5, **dadurch gekennzeichnet, dass** dem als Baueinheit ausgeführten Auswurfbeschleuniger (4) zumindest ein drehbares Antriebsrad (14) und/oder Abtriebsrad (15) zugeordnet ist, das in der Betriebsposition (P_{B}) des Auswurfbeschleunigers (4) in Antriebsverbindung mit einem Drehmomentübertragungsmittel (7) steht, wobei die Antriebsverbindung mit dem Drehmomentübertragungsmittel (7) in der Zugriffsposition (P_{z}) des Auswurfbeschleunigers (4) unterbrochen ist.

7. Landwirtschaftliche Erntemaschine nach Anspruch 6, **dadurch gekennzeichnet, dass** das zumindest eine Antriebsrad (14) und/oder Abtriebsrad (15) auf einer zu der Schwenkachse (11) des als Baueinheit ausgeführten Auswurfbeschleunigers (4) parallelen Welle (8) gelagert ist, die von der Schwenkachse (11) beabstandet ist.

8. Landwirtschaftliche Erntemaschine nach Anspruch 6 oder 7, **dadurch gekennzeichnet, dass** in der Betriebsposition (P_{B}) das Antriebsrad (14) des als Baueinheit ausgeführten Auswurfbeschleunigers (4) mit einem Hauptantriebsriemen (7) der Erntemaschine (1) in Antriebsverbindung steht, um über diesen antreibbar zu sein.

9. Landwirtschaftliche Erntemaschine nach einem der Ansprüche 6 bis 8, **dadurch gekennzeichnet, dass** in der Betriebsposition (P_{B}) das Abtriebsrad (15) des als Baueinheit ausgeführten Auswurfbeschleunigers (4) mit einem Nebenantriebsriemen der Erntemaschine (1) in Antriebsverbindung steht, um über diesen zumindest ein weiteres Arbeitsaggregat (3) anzutreiben.

10. Landwirtschaftliche Erntemaschine nach einem der Ansprüche 1 bis 9, **dadurch gekennzeichnet, dass** in den Wartungsraum (5) eine Transporteinrichtung (13) einbringbar ist, die geeignet ist, den in die Zugriffsposition (P_{z}) bewegten Auswurfbeschleuniger (4) aufzunehmen.

11. Landwirtschaftliche Erntemaschine nach einem der Ansprüche 1 bis 10, **dadurch gekennzeichnet, dass** sich der Wartungsraum (5) derart öffnen lässt, dass der in die Zugriffsposition (P_{z}) bewegte Auswurfbeschleuniger (4) mittels eines Flurförderfahrzeugs und/oder eines sonstigen Hub- und/oder Transportgeräts, vorzugsweise unter Zuhilfenahme der Transporteinrichtung (13), aus dem Wartungsraum (5) entnehmbar ist.

12. Landwirtschaftliche Erntemaschine nach einem der Ansprüche 1 bis 11, **dadurch gekennzeichnet, dass** dieser Mittel zugeordnet sind, womit der Auswurfbeschleuniger (4) aus der Betriebsposition (P_{B}) und/oder aus der Zugriffsposition (P_{z}) in eine Wartungsposition (P_{w}) außerhalb, insbesondere seitlich oder unterhalb des Wartungsraums (5) der Erntemaschine (1) bewegbar ist.

## Claims

1. An agricultural harvester, in particular a self-propelled forage harvester (1), comprising at least one working assembly (2, 3) for processing a crop material flow and a discharge accelerator (4) for the processed crop material, **characterised in that** the discharge accelerator (4) is in the form of a structural unit which includes at least one acceleration member and a surrounding housing, in relation to which the acceleration member is mounted rotatably by means of a shaft, which structural unit can be mounted as a whole in an operating position (P_{B}) downstream of the working assembly (2, 3) in the flow path of the crop material flow and can be dismantled from said operating position (P_{B}), by the provision of means with which the structural unit (4) is moveable from the operating position (P_{B}) into an access position (P_{z}) within a maintenance space (5) of the harvester (1), wherein the means include a pivotably moveable mounting of the structural unit (4) with respect to a machine frame (9) of the harvester (1).

2. An agricultural harvester according to claim 1 **characterised in that** the means include a pivotably moveable mounting of the discharge accelerator (4) which is in the form of the structural unit in relation to a cab carrier (10) of the harvester (1).

3. An agricultural harvester according to claim 1 or claim 2 **characterised in that** the discharge accelerator (4) which is in the form of the structural unit is mounted rotatably with respect to the machine frame (9) about a pivot axis (11) to be pivotable from the operating position (P_{B}) into the access position (P_{z}).

4. An agricultural harvester according to one of claims 1 to 3 **characterised in that** the means include a lifting device which is associated with the harvester (1) and which is suitable for fully or partially carrying the weight of the discharge accelerator (4) which is in the form of the structural unit at least during the movement from the operating position (P_{B}) into the access position (P_{z}).

5. An agricultural harvester according to one of claims 1 to 4 **characterised in that** the discharge accelerator (4) which is in the form of a structural unit can be arrested in the operating position (P_{B}) in particular by same being screwable to a conveyor shaft (12) of the harvester (1), that is fixed with respect to the frame.

6. An agricultural harvester according to one of claims 1 to 5 **characterised in that** associated with the discharge accelerator (4) which is in the form of a structural unit is at least one rotatable drive wheel (14) and/or driven wheel (15) which in the operating position (P_{B}) of the discharge accelerator (4) is drivingly connected to a torque transmission means (7), wherein the driving connection with the torque transmission means (7) is interrupted in the access position (P_{z}) of the discharge accelerator (4).

7. An agricultural harvester according to claim 6 **characterised in that** the at least one drive wheel (14) and/or driven wheel (15) is mounted on a shaft (8) which is parallel to the pivot axis (11) of the discharge accelerator (4) in the form of the structural unit and which is spaced from the pivot axis (11).

8. An agricultural harvester according to claim 6 or claim 7 **characterised in that** in the operating position (P_{B}) the drive wheel (14) of the discharge accelerator (4) which is in the form of the structural unit is drivingly connected to a main drive belt (7) of the harvester (1) to be drivable by way thereof.

9. An agricultural harvester according to one of claims 6 to 8 **characterised in that** in the operating position (P_{B}) the driven wheel (15) of the discharge accelerator (4) which is in the form of the structural unit is drivingly connected to an auxiliary drive belt of the harvester (1) in order to drive at least one further working assembly (3) by way thereof.

10. An agricultural harvester according to one of claims 1 to 9 **characterised in that** a transport device (13) can be introduced into the maintenance space (5), the transport device being suitable to pick up the discharge accelerator (4) when moved into the access position (Pz).

11. An agricultural harvester according to one of claims 1 to 10 **characterised in that** the maintenance space (5) can be opened in such a way that the discharge accelerator (4) when moved into the access position (P_{z}) is removable from the maintenance space (5) by means of a floor conveyor vehicle and/or another lifting and/or transport device, preferably with the aid of the transport device (13).

12. An agricultural harvester according to one of claims 1 to 11 **characterised in that** associated therewith are means whereby the discharge accelerator (4) is moveable from the operating position (P_{B}) and/or from the access position (P_{z}) into a maintenance position (Pw) outside, in particular laterally, or beneath the maintenance space (5) of the harvester (1).

## Revendications

1. Machine agricole de récolte, en particulier ensileuse automotrice (1), comprenant au moins un organe de travail (2, 3) pour traiter un flux de récolte et un accélérateur d'éjection (4) pour le produit récolté traité, **caractérisée en ce que** l'accélérateur d'éjection (4) est conformé en une unité structurelle qui comprend au moins un organe d'accélération ainsi qu'un carter enveloppant en face duquel l'organe d'accélération est monté à rotation au moyen d'un arbre et qui peut être posée en entier dans une position de fonctionnement (P_{B}) en aval de l'organe de travail (2, 3) sur le trajet d'écoulement du flux de récolte et être déposée de cette position de fonctionnement (P_{B}) par le fait que sont prévus des moyens qui permettent de déplacer l'unité structurelle (4) de la position de fonctionnement (P_{B}) vers une position d'accès (P_{z}) à l'intérieur d'un espace service (5) de la machine de récolte (1), les moyens englobant un montage oscillant de l'unité structurelle (4) par rapport à un bâti de machine (9) de la machine de récolte (1).

2. Machine agricole de récolte selon la revendication 1, **caractérisée en ce que** les moyens englobent un montage oscillant de l'accélérateur d'éjection (4), conformé en unité structurelle, par rapport à un support de cabine (10) de la machine de récolte (1).

3. Machine agricole de récolte selon la revendication 1 ou 2, **caractérisée en ce que** l'accélérateur d'éjection (4) conformé en unité structurelle est monté à rotation autour d'un axe de pivotement (11) par rapport au bâti de machine (9) afin de pouvoir être transféré de la position de fonctionnement (P_{B}) vers la position d'accès (P_{z}).

4. Machine agricole de récolte selon une des revendications 1 à 3, **caractérisée en ce que** les moyens englobent un équipement de levage qui est associé à la machine de récolte (1) et qui est apte à recevoir en tout en en partie le poids de l'accélérateur d'éjection (4), conformé en unité structurelle, au moins pendant le déplacement de la position de fonctionnement (P_{B}) vers la position d'accès (P_{z}).

5. Machine agricole de récolte selon une des revendications 1 à 4, **caractérisée en ce que** l'accélérateur d'éjection (4) conformé en unité structurelle peut être immobilisé dans la position de fonctionnement (P_{B}), en particulier par le fait qu'il est vissable à une colonne d'amenée (12) solidaire du bâti de la machine de récolte (1).

6. Machine agricole de récolte selon une des revendications 1 à 5, **caractérisée en ce qu'**à l'accélérateur d'éjection (4) conformé en unité structurelle est associée au moins une poulie menante (14) et/ou une poulie menée (15) rotatives, laquelle est en liaison d'entraînement avec un moyen de transmission de couple (7) dans la position de fonctionnement (P_{B}) de l'accélérateur d'éjection (4), la liaison d'entraînement avec le moyen de transmission de couple (7) étant interrompue dans la position d'accès (P_{z}) de l'accélérateur d'éjection (4) .

7. Machine agricole de récolte selon la revendication 6, **caractérisée en ce que** la au moins une poulie menante (14) et/ou poulie menée (15) est montée sur un arbre (8) qui est parallèle à l'axe de rotation (11) de l'accélérateur d'éjection (4) conformé en unité structurelle et qui est distant de l'axe de rotation (11) .

8. Machine agricole de récolte selon la revendication 6 ou 7, **caractérisée en ce que**, dans la position de fonctionnement (P_{B}), la poulie menante (14) de l'accélérateur d'éjection (4) conformé en unité structurelle est en liaison d'entraînement avec une courroie d'entraînement principale (7) de la machine de récolte (1) pour pouvoir être entraînée par celle-ci.

9. Machine agricole de récolte selon une des revendications 6 à 8, **caractérisée en ce que**, dans la position de fonctionnement (P_{B}), la poulie menée (15) de l'accélérateur d'éjection (4) conformé en unité structurelle est en liaison d'entraînement avec une courroie d'entraînement auxiliaire de la machine de récolte (1) pour entraîner, par l'intermédiaire de celle-ci, au moins un organe de travail supplémentaire (3) .

10. Machine agricole de récolte selon une des revendications 1 à 9, **caractérisée en ce que** dans l'espace service (5) peut être amené un équipement de transport (13) qui est apte à prendre en charge l'accélérateur d'éjection (4) déplacé dans la position d'accès (P_{z}) .

11. Machine agricole de récolte selon une des revendications 1 à 10, **caractérisé en ce que** l'espace service (5) peut être ouvert de façon que l'accélérateur d'éjection (4) déplacé dans la position d'accès (P_{z}) puisse être retiré de l'espace service (5) au moyen d'un véhicule de manutention et/ou d'un autre appareil de levage et/ou de transport, de préférence avec l'aide de l'équipement de transport (13) .

12. Machine agricole de récolte selon une des revendications 1 à 11, **caractérisée en ce qu'**à celle-ci sont associés des moyens permettant de déplacer l'accélérateur d'éjection (4) de la position de fonctionnement (P_{B}) et/ou de la position d'accès (P_{z}) vers une position de service (Pw) située en dehors, en particulier sur le côté et en dessous, de l'espace service (5) de la machine de récolte (1).
